(19) Europäisches Patentamt
European Patent Office
Office européen des brevets

(11) **EP 3 183 453 B1**

(12) **EUROPÄISCHE PATENTSCHRIFT**

(45) Veröffentlichungstag und Bekanntmachung des Hinweises auf die Patenterteilung:
**22.07.2020  Patentblatt 2020/30**

(21) Anmeldenummer: **15771239.9**

(22) Anmeldetag: **18.08.2015**

(51) Int Cl.:
*F03D 1/00* (2006.01)        *F03D 1/04* (2006.01)
*F03D 7/02* (2006.01)

(86) Internationale Anmeldenummer:
**PCT/IB2015/001384**

(87) Internationale Veröffentlichungsnummer:
**WO 2016/027148 (25.02.2016 Gazette 2016/08)**

(54) **TRANSLATORISCH BEWEGBARE WINDKRAFTANLAGE**

WIND TURBINE WHICH CAN BE MOVED IN TRANSLATION

ÉOLIENNE MOBILE EN TRANSLATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.08.2014   DE 102014012048**

(43) Veröffentlichungstag der Anmeldung:
**28.06.2017   Patentblatt 2017/26**

(73) Patentinhaber: **Franck, Jan**
**95466 Weidenberg (DE)**

(72) Erfinder: **Franck, Jan**
**95466 Weidenberg (DE)**

(74) Vertreter: **Küchler, Stefan**
**Patentanwalt**
**Färberstrasse 20**
**90402 Nürnberg (DE)**

(56) Entgegenhaltungen:
**DE-A1- 10 212 814        DE-U1-202009 006 590**
**US-A- 4 715 776           US-A1- 2005 244 262**
**US-A1- 2011 080 004**

**Beschreibung**

Die Erfindung richtet sich auf einen Windgenerator, umfassend ein um eine horizontale oder annähernd horizontale Achse drehbar gelagertes Windrad mit einem oder mehreren Flügeln oder sonstigen Windleitflächen zur Umwandlung von Strömungsenergie des Windes in Rotationsenergie, sowie wenigstens einen an die Nabe oder Welle des Windrades angekoppelten Generator zur Umwandlung der Rotationsenergie in elektrische Energie.

Zur Ergänzung und Entlastung der bisherigen Energieträger werden seit der sogenannten Energiewende verstärkt auch erneuerbare Energien nutzbar gemacht, insbesondere auch Windenergie.

Allerdings weht der Wind in vielen Gegenden eher unregelmäßig, und nicht selten sind zwischen windreichen Zeiten auch Phasen mit einer Flaute oder Windstille zu überbrücken. Ferner kann häufig in windschwachen Zeiten der massereiche Rotor einer Windkraftanlage nicht in Gang gebracht werden, so dass Windenergieanlagen im Allgemeinen erst bei höheren Windgeschwindigkeiten Energie liefern können.

Beispiele von Vorrichtungen aus dem Stand der Technik sind in US 2005/244262 und US 2011/080004 zu finden.

Aus den Nachteilen des beschriebenen Standes der Technik resultiert das die Erfindung initiierende Problem, einen Windgenerator derart auszubilden, dass die anströmende, relative Windgeschwindigkeit so groß als möglich ist bzw. gemacht werden kann.

Die Lösung dieses Problems gelingt dadurch, dass der Schwerpunkt des Windrades samt Nabe und Rotorwelle sowie daran angekoppelter, drehbeweglicher und um die selbe Drehachse rotierender Teile translatorisch oder näherungsweise translatorisch bewegbar ist. Als translatorische Bewegung wird insbesondere jegliche durch eine derartige Lagerung oder Führung zugelassene Bewegung angesehen, bei welcher die betreffenden Teile zumindest lokal in einer horizontalen oder näherungsweise horizontalen Richtung bewegbar sind, insbesondere in Richtung der Drehwelle des Windrades. Mit anderen Worten, die Bahn der translatorischen Bewegung kann entlang einer Kurve verlaufen und muss nicht gerade gestreckt sein. Durch einen solchen Freiheitsgrad der Bewegung besteht einerseits die Möglichkeit, einer Sturmbö unmittelbar ausweichen zu können und dadurch die Relativ-Strömungsgeschwindigkeit reduzieren zu können. Andererseits kann dann aber auch - beispielsweise nach Abklingen einer solchen Bö - durch eine Rückstellbewegung des Windrades die Relativ-Strömungsgeschwindigkeit wieder erhöht und damit die Energieausbeute gesteigert werden. Dabei wird die Möglichkeit genutzt, das Windrad translatorisch antreiben lassen zu können, um die Anströmgeschwindigkeit des Windes virtuell zu erhöhen. Wenn hierfür eine möglichst günstig zur Verfügung stehende Antriebsenergie genutzt wird, lässt sich damit sogar bei geringer oder ausbleibender Windströmung elektrische Energie erzeugen. Als Primärenergie kommen dabei andere Strömungsenergien in Betracht, bspw. eine Wasserströmung in einem Fluss (Wasserkraft) oder in Küstennähe (Gezeitenkraft) oder eine vertikale Luftströmung (Konvektionsenergie), gegebenenfalls unterstützt durch Elektroenergie oder andere fossile Energieträger, beispielsweise zum Zwecke eines Anlaufs. Wie weiter unten beschrieben wird, ist es allerdings auch denkbar, auch für die erfindungsgemäße, translatorische Bewegung Windenergie als Primärenergie zu nutzen.

Es hat sich als günstig erwiesen, dass die translatorische Bewegung des Windgenerators parallel zu der Fläche eines Untergrundes geführt erfolgt, insbesondere parallel zu einer vorzugsweise horizontalen Ebene geführt. Da der Wind fast immer überwiegend horizontal bläst, kann damit sichergestellt werden, dass die überwiegende Windrichtung und die translatorische Bewegung innerhalb der selben Ebene liegen, beispielsweise etwa innerhalb einer horizontalen Ebene.

Ferner kann der Windwiderstand des Windrades oder von Teilen desselben verstellbar sein, insbesondere indem der Anstellwinkel eines oder mehrerer Flügel oder sonstiger Windleitflächen veränderbar ist, oder indem das Windrad gegenüber der Anströmrichtung verschwenkbar ist, oder indem eine vorzugsweise stromlinienförmige Verkleidung vor das Windrad schwenkbar ist. Damit kann die Umwandlung von Windenergie in Rotationsenergie gesteuert werden. Dabei haben die beispielhaft aufgezählten Maßnahmen zur Einflussnahme auf den Windwiderstand unterschiedliche Auswirkungen auf den Umwandlungsgrad:
Werden die Flügel oder sonstigen Windleitflächen eher quer zur Windrichtung eingestellt, erhöht sich der Windwiderstand und auch der Umwandlungsgrad von Windenergie in Rotationsenergie; werden dese Flügel oder Windleitflächen eher parallel zur Windrichtung eingestellt, reduzieren sich der Windwiderstand und auch der Umwandlungsgrad von Windenergie in Rotationsenergie.

Wird die Dehachse des Windrades möglichst steil gegen die Windrichtung angestellt - im Idealfall antiparallel zu jener - so steigen der Windwiderstand und auch der Umwandlungsgrad von Windenergie in Rotationsenergie; wird das Windrad aus dem Wind gedreht, also der Zwischenwinkel zwischen Windrichtung und der Drehachse des Windrades erhöht, so sinken Windwiderstand und gleichzeitig auch der Umwandlungsgrad von Windenergie in Rotationsenergie.

Wird schließlich eine stromlinienförmige Verkleidung vor das Windrad geschwenkt, so erhöht sich einerseits der Windwiderstand, während andererseits die Energieausbeute, also der Umwandlungsgrad von Windenergie in Rotationsenergie, sinkt.

Wie man daraus erkennt, kann je nach Maßnahme das Änderungsverhältnis zwischen Windwiderstand und Energieausbeute gleichsinnig sein, also bei steigendem Windwiderstand steigt auch die Energieausbeute, aber auch gegensinnig, d.h., bei steigendem Windwiderstand sinkt die Energieausbeute.

Erfindungsgemäß ist der Windgenerator mobil ausgebildet mittels unterseitiger Räder. Damit besteht die Möglichkeit, ein Windrad bei Bedarf zu bewegen und damit eine Geschwindigkeit gegenüber der umgebenden Luft zu erzeugen, die es erlaubt, dass der Rotor (an-) laufen kann und Strom erzeugt.

Erfindungsgemäß ist der Windgenerator an Bord eines motorisierten Straßenfahrzeugs angeordnet. Gemäß einer nicht beanspruchten Konstruktion handelt es sich um ein Schienenfahrzeug.

Gemäß einer nicht beanspruchten Konstruktion kann das Fahrzeug auf Schienen fahren. Solchenfalls ist eine translatorische Bewegung in Richtung der Schienen möglich, eine andere Bewegung quer dazu jedoch nicht.

Ferner, gemäß einer nicht beanspruchten Konstruktion, sind die Schienen im Kreis verlegt. Dadurch kann ein darauf geführtes Fahrzeug oder Fahrwerk in beiden Richtungen unbegrenzt lange fahren.

Gemäß einer nicht beanspruchten Konstruktion sind die Schienen auf einem Turm oder einem sonstigen, hoch aufragenden Bauwerk angeordnet. Damit befindet sich das Windrad auf einem höheren Niveau gegenüber dem umgebenden Terrain, wo naturgemäß höhere Windgeschwindigkeiten herrschen, so dass eine gesteigerte Energieausbeute erreichbar ist.

Der Windgenerator und/oder dessen Windrad sollte(n) drehbewegungsmäßig nicht an eines der unterseitigen Räder gekoppelt sein. Mit anderen Worten, die Rotationsenergie des Windrades sollte nicht oder nicht unmittelbar auf die unterseitigen Räder übertragen werden, weil solchenfalls der Wikrungsgrad der Anordnung geschmälert würde.

Die Erfindung lässt sich dahingehend weiterbilden, dass die Gondel exzentrisch um eine vertikale Schwenkachse dreh- oder schwenkbar gelagert ist. Bei einer solchermaßen oberhalb des Erdbodens geführten Gondel sind die entlang des Umfangs eines Kreises verlegten Schienen ersetzt durch eine zentrale Lagerung um eine vertikale Schwenkachse.

Die Erfindung empfiehlt, dass die Gondel exzentrisch um eine vertikale Schwenkachse im Kreis schwenkbar gelagert ist, wobei die Drehachse des Windrades etwa tangential zu dem von der Gondel beschriebenen Kreis orientiert ist. Solchenfalls gibt es eine maximale Kopplung zwischen der anströmenden Windenergie und der daraus umgewandelten Rotationsenergie.

Vorzugsweise ist das Fahrzeug oder Fahrwerk oder die Gondel mit einer Einrichtung zu seinem/ihrem translatorischen Antrieb versehen oder gekoppelt, insbesondere mit einem Motor. Ein aktiv beeinflussbarer Leistungsfluss zu/von einem Motor bietet die Möglichkeit, die translatorische Bewegung entsprechend bestimmter Erfordernisse zu steuern oder gar zu regeln.

Die Antriebseinrichtung kann als Verbrennungsmotor ausgebildet sein oder als Elektromotor oder als ein um eine vertikale Achse drehbar gelagerter Propeller, der von einer vorzugsweise nach oben gerichteten Konvektionsströmung angetrieben wird. Die Art des Motors richtet sich nach der Art der eingesetzten Primärenergie. Die Ankopplung des Motors kann auf unterschiedliche Weise erfolgen, um die Windenergieanlage in eine translatorische Bewegung zu versetzen. Einerseits können davon unmittelbar die unterseitigen Räder eines Fahrzeugs oder Fahrwerks angetrieben werden, woraus sich dann indirekt dessen translatorische Bewegung ableitet. Oder der Motor ist mit dem Chassis des Fahrzeugs oder Fahrwerks verbunden oder gekoppelt, um dieses mit sich fortzuführen. Dabei ist zum Einen an einen Bügel oder Ausleger zu denken, welcher einen zentral angeordneten Motor mit dem entlang einer umlaufenden Peripherie verfahrbaren Fahrzeug oder Fahrwerk verbindet; andererseits könnte die Kopplung zwischen Motor und Fahrzeug oder Fahrwerk auch über ein Zugmittel erfolgen, beispielsweise über ein Seil, welches sich entlang der Strecke des Fahrzeugs oder Fahrwerks erstreckt.

Weitere Vorzüge ergeben sich dadurch, dass sich die Projektion des Schwerpunktes der Einrichtung für den Antrieb des Fahrwerks oder Fahrzeugs oder der Gondel, insbesondere des Motors, innerhalb eines von dem Fahzeug oder Fahrwerk oder der Gondel bei seiner/ihrer Bewegung beschriebenen Kreises befindet, vorzugsweise an oder nahe von dessen Mittelpunkt. Der Motor könnte dabei an Bord des Fahrzeugs oder Fahrwerks angeordnet sein; bevorzugt ist bei einer solchen Anordnung der Motor jedoch stationär angeordnet, bewegt sich also mit dem Fahrzeug nicht mit, sondern ist nur mit jenem gekoppelt. Dank seiner zentralen Position muss der Motor dem Fahzeug oder Fahrwerk oder der Gondel nicht folgen, sondern bleibt mit jenem über Zug-, Schub- oder Schwenkmittel gekoppelt.

Einer bevorzugte Anordnung zeichnet sich dadurch aus, dass sich die Projektion des Schwerpunktes der Einrichtung für den Antrieb des Fahrzeugs, insbesondere des Motors, auf den das Fahrzeug führenden Untergrund außerhalb eines von den Aufstandsbereichen der unterseitigen Räder auf dem Untergrund aufgespannten Vielecks befindet, was sich beispielsweie dadurch realisieren lässt, dass das Antriebsmittel sich nicht an Bord des Fahrzeugs befindet, sondern an einem externen Ort.

Andererseits sollte sich die Projektion des Schwerpunktes des Windrades oder Windgenerators auf den das Fahrzeug führenden Untergrund innerhalb eines von den Aufstandsbereichen der unterseitigen Räder auf dem Untergrund aufgespannten Vielecks befinden. Mit anderen Worten, das Windrad ist an Bord des Fahrzeugs oder Fahrwerks gelagert, wobei aus Gründen einer maximalen Stabilität eine symmetrische Gewichtsverteilung angestrebt wird, wobei sich der das Windrad oder der gesamte Windgenerator möglichst mittig an dem Fahrzeug oder Fahrwerk befindet.

Ein erfindungsgemäßes Windrad sollte nicht innerhalb eines Windkanals angeordnet oder von Windleitblechen umgeben sein, um bei jeder Orientierung des Windrades stets ein Maximum der anströmenden Luft einfangen zu können. Auerdem könnte ein Windkanal oder dergleichen bei einer schrägen Anströmung durch den Wind eine erhöhte Windangriffsfläche bieten, mit der Gefahr von Instabilitäten.

Der Durchmesser des Windrades sollte größer sein als die größte Breite des Fahrzeugs oder Fahrwerks, insbesondere größer als der seitliche Abstand zwischen zwei unterseitigen Rädern desselben an unterschiedlichen Seiten des Fahrzeugs oder Fahrwerks. Dadurch kann ein Maximum an Windenergie eingefangen und in Rotationsenergie umgewandelt werden.

An einer Führungseinrichtung - also auf Schienen oder an einer vertikalen Schwenkachse - können gleichzeitig mehrere Fahrwerke oder Gondeln geführt sein. Dadurch kann die Effizienz der Anlage weiter gesteigert werden, weil die Energieausbeute im Allgemeinen etwa proportional zu der Anzahl der Windräder bzw. Windgeneratoren ist.

Die Erfindung sieht weiterhin vor, dass mehrere, an der selben Führungseinrichtung geführte Fahrwerke oder Gondeln miteinander verbunden oder gekoppelt sind, um synchrone Bewegungen auszuführen. Eine solche Verbindung zieht einerseits eine Synchronität der Bewegungen nach sich, nur eben phasenversetzt, und bietet andererseits die Möglichkeit, Kräfte zwischen den verschiedenen Fahrwerken oder Gondeln übertragen zu können, insbesondere auch Antriebskräfte für die erfindungsgemäße translatorische Bewegung.

Die vom Wind anzuströmenden Seiten der Windräder an mehreren Fahrwerken oder Gondeln können in die derselben Bewegungsrichtung des Verbindungsmittels entsprechenden, lokalen Richtungen weisen. Mit anderen Worten, sie befinden sich beispielsweise jeweils an der in Bewegungsrichtung gesehen vorderen Seite. Bei einer Kreisführung - also mit im Kreis verlegten Schienen oder mit einer zentralen Schwenkachse - sind dann die betreffenden Windräder beispielsweise jeweils im Uhrzeigersinn vorne angeordnet, oder alternativ dazu jeweils im Uhrzeigersinn hinten. Bei einem gemeinsamen Umlauf bei Windstille erfahren dann alle Windräder etwa gleiche Anströmungen; bei einer Windströmung wird von zwei Windrädern dagegen stets ein Windrad vom Wind angetrieben, während das andere gleichzeitig abgebremst wird.

Andererseits gibt es auch eine Anordnung, wobei die vom Wind anzuströmenden Seiten der Windräder an mehreren Fahrwerken oder Gondeln in die entgegengesetzten Bewegungsrichtungen des Verbindungsmittels entsprechenden, lokalen Richtungen weisen. Dann gäbe es eine Umlauf-Position, in der beide Windräder der anströmenden Luft des Windes zugewandt sind und also von jenem in Rotation versetzt werden.

Die Erfindung lässt sich dahingehend weiterbilden, dass die Flügel eines Windrades um ihre Längsachsen verstellbar sind, um an unterschiedliche Relativgeschwindigkeiten der anströmenden Luft angeasst werden zu können. Diese Funktion ist vor allem bei Wind vorteilhaft, wenn sich das Windrad längs einer gebogenen Kurve translatorisch bewegt und sich demzufolge die relative Anströmgeschwindigkeit der Luft ändert.

Wenn die Flügel eines Windrades kontinuierlich verstellbar sind, also über beliebige, unbegrenzte Anstellwinkel hinaus, so lässt sich auch eine Anpassung an eine Umkehr der Relativdrehrichtung gegenüber der anströmenden Luft bewerkstelligen.

Wenn mehrere Windräder bewegungsmäßig miteinander gekoppelt und zur Kraftübertragung untereinander verbunden sind, so lässt sich eine Regelung implementieren, welche mehrere, vorzugsweise zwei, untereinander verbundene Windräder stets gegen den Wind ausrichtet, indem jeweils der Anstellwinkel der Flügel des in der jeweiligen Anströmrichtung vorderen Windrades derart verstellt wird, dass der Windwiderstand dieses Windrades erhöht wird und also von dem anströmenden Wind zurückgedrängt wird. Da für die Verstellung der Anstellwinkel der Blätter nur eine minimale Energie benötigt wird, lässt sich auf diesem Wege der Wirkungsgrad der Anlage verbessern; die eigentliche Energie zur Ausrichtung der Windräder liefert der Wind selbst.

Bevorzugt umfasst eine erfindungsgemäße Windenergieanlage eine Einrichtung zur Einspeisung der gewonnenen Elektroenergie als Strom in ein Stromnetz, insbesondere in ein Wechselstrom- oder Drehstromnetz. Zur Übertragung größerer Leistungen ist es dabei unerlässlich, dass die erfindungsgemäße Windenergieanlage durch ein Kabel mit dem Stromnetz verbunden ist, wenigstens durch ein zweiadriges Kabel im Fall von Wechselstrom-Einspeisung, oder durch wenigstens ein dreiadriges Kabel im Fall von Drehstrom-Einspeisung. Bei umlaufenden Anordnungen kann es erforderlich sein, den Strom von einem Windgenerator über Schleifringe zu einem ortsfesten Anschlusskabel zu transportieren.

In Mitteleuropa werden öffentliche Drehstromnetze und Wechselstromnetze als Teil davon mit einer Frequenz von 50 Hz betrieben, in anderen Ländern wie Nordamerika dagegen mit 60 Hz. In jedem Fall ist daher eine eine Einrichtung zur Synchronisation des einzuspeisenden Stroms mit der Frequenz der Spannung in dem Wechselstrom- oder Drehstromnetz erforderlich. Üblicherweise wird dazu der in einem Windgenerator erzeugte Strom von einem Wechselrichter oder einem Umrichter auf die betreffende Frequenz transformiert und dann gegen die Spannung des Netzes in jenes hineingeschoben. Üblicherweise wird dazu die Netzspannung abgetastet und daraus die gewünschte Phasenlage des Stroms und sodann auch dessen Amplitude berechnet und dann der Wechselrichter oder Umrichter entsprechend gesteuert, was durch eine geeignete Taktung der Stromventile erfolgt.

Erfindungsgemäß ist weiterhin vorgesehen dass zwischen einem Windrad und dem jenem zugeordneten Elektrogenerator ein Freilauf angeordnet ist, so dass bei einer Gegenbö trotz des abgebremsten Windrades der Elektrogenerator im Freilauf nahezu ungebremst weiter rotieren kann. Solchenfalls wird dem rotierenden Generator durch eine Gegenbö keine Energie entzogen, wodurch der Wirkungsgrad weiter optimiert wird. Außerdem kann an dem Windrad, vorzugsweise strömungsaufwärts oder strömungsabwärts desselben, eine Einrichtung vorgesehen sein zur Umlenkung von Gegenböen oder von sonstigen, für die normale Drehrichtung des Windrades ungünstigen Luftströmungen. Beispielsweise kann ein umlaufendes Windrad während seines Rücklaufs mit dem Wind von hinten angeströmt werden anstatt von vorne, wie üblich. Diese umgekehrte Anströmrichtung würde das Windrad abbremsen, und daher sollte eine solche unübliche Wind-Anströmung während eines Rücklaufs von dem Windrad ferngehalten werden. Dies kann durch Umlenkung dieser Strömung erfolgen. Schließlich entspricht es der Lehre der Erfindung, dass die Einrichtung zur Umlenkung von Gegenböen oder von sonstigen, für die normale Drehrichtung des Windrades ungünstiger Luftströmungen als lamellenartiger Vorhang ausgebildet ist, dessen Lamellen bei normaler Anströmrichtung der Luft geöffnet werden, bei entgegengesetzter Anströmrichtung der Luft dagegen geschlossen werden.

Man kann hierbei denken an eine Vielzahl von zueinander parallelen Lamellen, jeweils mit horizontaler Längsachse. Diese sind jeweils um eine ihrer Längskanten schwenkbar gelagert, insbesondere um die jeweils ober Längskante, beispielsweise in seitlichen Lagern. Bei den üblichen Strömungsverhältnissen werden sie von dem Wind in eine etwa horizontale Lage gesteuert, so dass die Zwischenräume zwischen den Lamellen frei sind und der Wind nahezu ungehindert bis zu dem Windrad strömen kann, um dieses in der üblichen Drehrichtung anzutreiben. Bei "unüblichen" Strömungsverhältnissen fallen die Lamellen jedoch in eine etwa vertikale Ebene herab, können aber dank dortiger Anschlagelemente nicht weiter verschwenken, sondern bleiben in dieser Ebene und verschließen daher gemeinsam den gesamten anströmbereich, halten also den ungünstigen Wind von dem Windrad fern. Dieses wird daher nicht abgebremst. Darüber hinaus kann der nun auf den Lamellen lastende Staudruck des Windes als translatorischer Antrieb verwendet werden, bis das betreffende Windrad solchermaßen translatorisch beschleunigt wieder einen Bereich mit üblichen Windverhältnissen erreicht und daraus sodann Rotationsenergie schöpfen kann, die schließlich in Elektroenergie umgewandelt wird.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1    eine Windkraftanlage mit einem auf Schienen verfahrbaren Windrad und Windgenerator;

Fig. 2    eine andere Windkraftanlage mit zwei auf Schienen verfahrbaren Windrädern samt je einem Windgenerator, wobei eine automatische Regelung der Azimut-Ausrichtung gegen den Wind implementiert ist; sowie

Fig. 3    eine abermals abgewandelte Windkraftanlage mit zwei auf Schienen verfahrbaren Windrädern samt je einem Windgenerator, wobei die Windräder mit variablen Strömungsblenden versehen sind, um ungünstige Strömungsverhältnisse von dem betreffenden Windrad fernzuhalten.

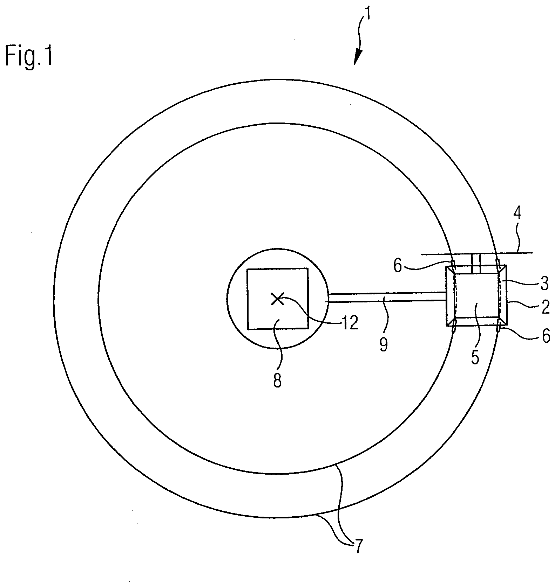

Die erfindungsgemäße mobile Windkraftanlage 1 gemäß Fig. 1 umfasst ein Fahrwerk 2 mit einem Gerüst 3 für ein Windrad 4 sowie einen daran gekoppelten Elektrogenerator 5, beispielsweise über ein Getriebe.

An dem Fahrwerk 2 sind Räder 6 mit Radkränzen gelagert, welche auf Schienen 7 verfahrbar sind. Dadurch kann die Windkraftanlage 1 entlang der Schienen 7 verfahren werden.

Ein Antrieb für das Fahrwerk 2 kann vorgesehen sein, beispielsweise durch einen daran gekoppelten Motor oder über einen mit einem zentral innerhalb eines Schienenkreises angeordneten Motor 8 gekoppelten Ausleger 9.

Ferner besteht die Möglichkeit, anstelle eines Motors 8 auch eine andere Art des Antriebs vorzusehen, beispielsweise ein Konvektionsrad mit einer vertikalen Achse, so dass aufsteigende, erwärmte Luft als Antriebsenergie nutzbar gemacht werden kann, um die Anströmgeschwindigkeit zu erhöhen, insbesondere bei geringer oder ausbleibender Luftströmung.

Ein Vorteil der Erfindung besteht darin, dass das Windrad 4 mitsamt des Fahrwerks 2 bei einem zu starken Wind längs der Schienen 7 zurückgenommen werden kann, so dass sich die Anströmgeschwindigkeit virtuell reduziert. Bei nachlassender Windgeschwindigkeit kann dann das Fahrwerk 2 mitsamt dem Windrad 4 wieder nach vorne gefahren wreden, wodurch sich die Anströmgeschwindigkeit virtuell steigert. Insgesmt lässt sich damit eine relativ konstante, virtuelle Anströmgeschwindigkeit realisieren.

In der Zeichnung ist das Windrad 4 exzentrisch zu dem Fahrwerk 2 angeordnet, also nicht über dessen Schwerpunkt. Allerdings lässt sich dies im Rahmen einer anderen Anordnung entsprechend abändern, insbesondere so, dass der Schwerpunkt der Gesamtanordnung aus Fahrwerk 2, Gerüst 3, Windrad 4 und Elektrogenerator 5 sich etwa im Zentrum der von den vier Rädern 6 aufgespannten Fläche befindet, so dass die Gefahr eines Kippens minimiert ist.

Einem Kippen des Fahrwerks 2 mitsamt seiner Aufbauten kann auch dadurch entgegengewirkt werden, indem die Schienen 7 nicht nur eine obere Laufbahn aufweisen, sondern auch eine untere Laufbahn, die von geeignet geführten Rädern 6 untergriffen wird.

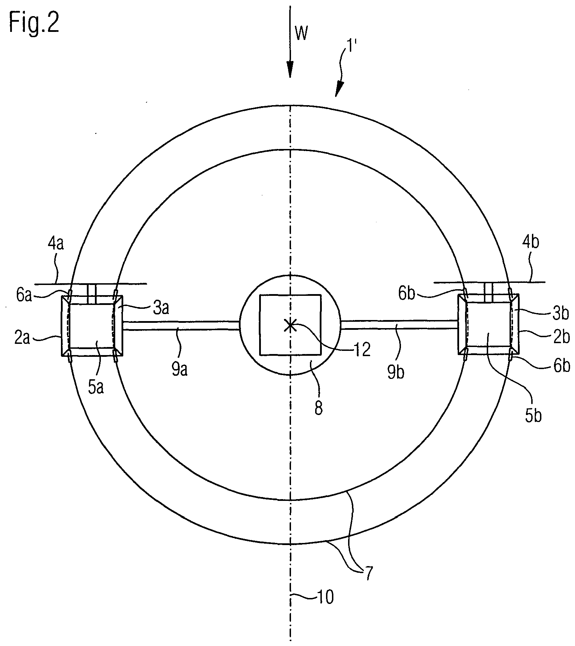

In Fig. 2 ist eine Weiterbildung der Anordnung nach Fig. 1 zu sehen. Hierbei sind jeweils zwei Fahrwerke 2a, 2b vorgesehen, welche je ein Windrad 4a, 4b und je einen Elektrogenerator 5a, 5b tragen. Die Anordnung ist spiegelsymmetrisch zu einer genau zwischen den beiden Fahrwerken 2a, 2b hindurchlaufenden Symmetrieachse 10.

Eine optimale Anströmung durch den Wind ist dann gegeben, wenn die Windrichtung parallel zu der Symmetrieachse 10 ist. Dann sind auch die Strömungsverhältnisse mit guter Näherung zueinander symmetrisch, und damit auch die auf die beiden Windräder 4a, 4b einwirkenden Kräfte. Damit halten sich diese Kräfte die Waage.

Da die beiden Fahrwerke 2a, 2b durch die Ausleger 9a, 9b starr miteinander verbunden sind, nehmen sie stets einander diametral gegenüber liegende Positionen längs des Schienenkreises 7 ein, bezogen auf dessen Mittelpunkt, wo sich der zentrale Motor 8 befindet.

Die Gesamtanordnung aus Fahrwerken 2a, 2b und Auslegern 9a, 9b ist in sich starr und kann daher allenfalls um eine zentrale Achse hin und her schwingen, wobei die beiden Fahrwerke 2a, 2b längs der Schienen 7 fahren. Diese Eigenschaft kann für eine selbsttätige Ausrichtung der beiden Windräder 4a, 4b im Hinblick auf die anströmende Wind- oder Luftströmung genutzt werden. Dies kann u.a. dadurch bewerkstelligt werden, dass die Anstellwinkel der Flügel desjenigen Windrades 4a, 4b, welches sich an dem gegenüber dem Wind jeweils vorderen Fahrwerk 2a, 2b befindet, flacher gestellt werden, also in eine Ebene quer zu der aktuellen Windrichtung. Dadurch vergrößert sich die dem Wind ausgesetzte Fläche dieses Windrades 4a, 4b, und es entsteht ein Drehmoment, welches das betreffende Windrad 4a, 4b wieder nach hinten drückt, wobei dann das andere Windrad 4b, 4a längs der Kreisbahn 7 wieder nach vorne fährt. Die dazu erforderliche Kraft bzw. Antriebsenergie liefert der Wind.

Im Übrigen hat natürlich eine Verdoppelung oder Vervielfachung der Windräder 4a, 4b eine entsprechend gesteigerte Leistungsumwandlung zur Folge.

Während sich bei der Windkraftanlage 1' nach Fig. 2 die Gesamtanordnung zumeist in einem Gleichgewicht befindet und daher stets nur kleine Ausgleichbewegungen ausführt, ist die Windkraftanlage 1" für einen umlaufenden Betrieb mit einer Drehzahl D optimiert, insbesondere auch bei anströmendem Wind W.

Während also die Gesamtanordnung aus Windrädern 4a, 4b, Fahrwerken 2a, 2b und Auslegern 9a, 9b um den Mittelpunkt des Schienenkreises 7 rotiert, ist stets eines der beiden Windräder 4a, 4b dem Wind W zugewandt, das jeweils andere dagegen zu just dem selben Zeitpunkt abgewandt, wird also von hinten angeströmt, was die Rotation dieses Windrades 4a, 4b abbremsen würde.

Ein solcher nachteiliger Effekt kann beispielsweise dadurch vermieden werden, dass jeweils zwischen einem Windrad 4a, 4b und dem zugeordneten Elektrogenerator 6a, 6b jeweils ein Freilauf angeordnet ist, welcher nur antreibende Drehmomente in der üblichen Drehrichtung überträgt, dagegen keine bremsenden Drehmomente.

Um ein Abbremsen eines Windrades 4a, 4b zu vermeiden, kann außerdem im Bereich jedes Fahrwerks 2a, 2b je ein lamellenartiger Vorhang 11a, 11b vorgesehen sein, in unmittelbarer Nähe hinter einem Windrad 4a, 4b.

Die lamellenartigen Vorhänge 11a, 11b sind so beschaffen, dass ein von vorne auf das betreffende Windrad 4a, 4b anströmender Wind die um ihre Längskanten, vorzugsweise um ihre oberen Längskanten verschwenkbaren Lamellen nach hinten auslenken kann, also in Windrichtung W. Die Lamellen schwenken also aus einer gemeinsamen Ebene heraus und stellen sich parallel zueinander ein, wobei zwischen benachbarten Lamellen ein großer Zwischenraum entsteht, welcher den Wind nahezu ungehindert passieren lässt.

Ist die Windrichtung W jedoch engegengesetzt, so wird ein entsprechendes Wegschwenken der Lamellen in der anderen Richtung durch Anschlagelemente verhindert. Die Lamellen bleiben also in einer gemeinsamen Ebene, der Lamellenvorhang bleibt geschlossen, der Wind kann nicht bis zu dem betreffenden Windrad 4a, 4b passieren und dieses also auch nicht abbremsen.

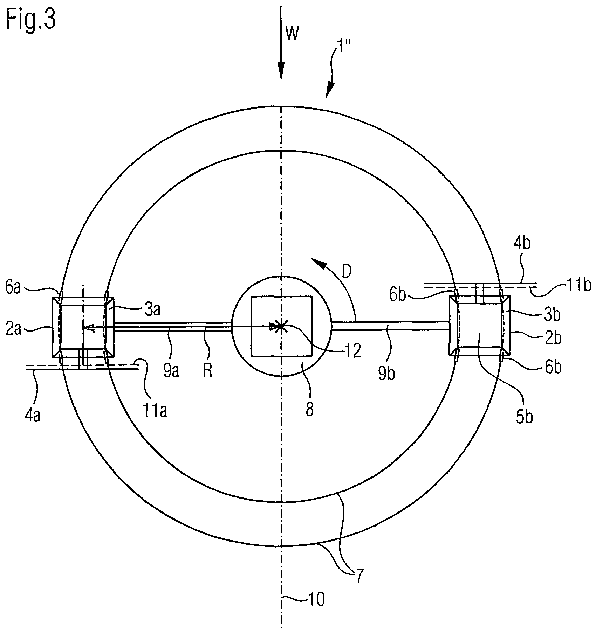

Gleichzeitig liefert der auf dem geschlossenen Lamellenvorhang lastende Staudruck des Windes W ein die Gesamtanordnung aus Fahrwerken 2a, 2b, Windrädern 4a, 4b und Elektrogeneratoren 6a, 6b in Umlaufrichtung antreibendes Drehmoment, welches das jeweils vordere Windrad 4a, 4b gegen den Wind antreibt, so dass in der in Fig. 3 gezeigten Stellung maximal eine virtuelle Strömung S entsteht, die gegeben ist zu

$$S = W + D * 2 \pi R,$$

wobei R der mittlere Abstand eines Windrades 4a, 4b von dem Mittelpunkt 12 des Schienenkreises 7 bedeutet.

Während dabei der Summand $D * 2 \pi R$ unabhängig von der jeweiligen Position des betreffenden Fahrwerks 2a, 2b näherungsweise konstant bleibt, hängt der Einfluss des Summanden W von der augenblicklichen Position des betreffenden Windrades 4a, eb ab, etwa gemäß einer Sinus- oder Kosinusfunktion, so dass sich die Anströmung etwa wie folgt ergibt:

$$S = W * \sin \alpha + D * 2 \pi R,$$

wobei $\alpha$ der Umlaufwinkel ist, bezogen auf einen Nullpunkt auf dem dem Wind W abgewandten Schenkel der Symmetrieachse 10.

Ein oben beschriebener Freilauf wie auch der weiter oben geschilderte Lamellenvorhang 11a, 11b verhindert dabei eine abbremsende Wirkung, insbesondere falls der Faktor $\sin \alpha$ kleiner als Null ist. Daher gilt in diesem Falle immer:

$$S > D * 2\,\pi\,R,$$

da W * sin α für Werte kleiner als Null ausmaskiert wird. Das antreibende Drehmoment D liefert dabei jeweils der in Fig. 3 gerade links von der Symmetrielinie 10 befindliche Lamellenvorhang 11a, welcher geschlossen ist und die anströmende Luft auffängt und über die Ausleger 9a, 9b auf beide Windräder 4a, 4b verteilt.

Diese höhere virtuelle Strömung S hat eine höhere Drehzahl des Windrades 4a, 4b zur Folge, und daraus folgt unter anderem ein leichterer Anlauf der Anlage.

Bei einer weiteren, alternativen Ausführungsform kann die Windkraftanlage 1 miniaturisiert ausgebildet und an Bord eines straßentauglichen Fahrzeugs angeordnet sein, so dass dieses aus seiner Bewegungsenergie Strom erzeugen kann, bspw. während eines Bremsvorgangs. Bevorzugt ist dazu eine solche Windkraftanlage innerhalb der Karosserie angeordnet, bspw. unterhalb der Motorhaube, und kann bei Bedarf zugeschaltet werden, sobald überschüssige Bewegungsenergie zur Verfügung steht, bspw. während eines Bremsvorgangs oder während einer hangabwärtigen Fahrt. Zu diesem Zweck kann das Windrad hinter einer stromlinienförmigen Verkleidung verborgen sein, die bei Bedarf geöffnet werden kann, während Beschleunigungsvorgängen dagegen geschlossen ist, um keinen Luftwiderstand zu erzeugen.

Bezugszeichenliste

1    Windkraftanlage
2    Fahrwerk
3    Gerüst
4    Windrad
5    Elektrogenerator
6    Räder
7    Schienen
8    Motor
9    Ausleger
10   Symmetrieachse
11   Lamellenvorhang
12   Mittelpunkt

**Patentansprüche**

1.  Windgenerator (1), umfassend ein um eine horizontale oder annähernd horizontale Drehachse drehbar gelagertes Windrad (4) mit einem oder mehreren Flügeln oder sonstigen Windleitflächen zur Umwandlung von Strömungsenergie des Windes in Rotationsenergie, sowie wenigstens einen an die Nabe oder Welle des Windrades oder an die Ausgangswelle eines daran angeschlossenen Getriebes angekoppelten Generator (5) zur Umwandlung der Rotationsenergie in elektrische Energie, wobei der Schwerpunkt des Windrades (4) samt Nabe und Rotorwelle sowie daran angekoppelter, drehbeweglicher und um die selbe Drehachse rotierender Teile in einer Richtung ganz oder überwiegend parallel zu der Drehachse des Windrades (4) translatorisch bewegbar ist, wobei das Windrad (4) weder innerhalb eines Windkanals angeordnet noch von Windleitblechen umgeben ist, so dass das Windrad stets ein Maximum der anströmenden Luft einfangen kann, **dadurch gekennzeichnet, dass**

   a) der Windgenerator (1) als Straßenfahrzeug mit unterseitigen Rädern ausgebildet ist,
   b) wobei das Straßenfahrzeug dazu ausgebildet ist in einer Richtung parallel zu der Drehachse des Windrades (4) translatorisch angetrieben zu werden, um die Anströmgeschwindigkeit des Windes virtuell zu erhöhen oder zu reduzieren,
   c) und wobei zwischen dem Windrad (4) und dem jenem zugeordneten Elektrogenerator (5) ein Freilauf angeordnet ist, so dass bei einer Gegenbö trotz des abgebremsten Windrades (4) der Elektrogenerator (5) im Freilauf nahezu ungebremst weiter rotieren kann.

2.  Windgenerator (1) nach Anspruch 1 **dadurch gekennzeichnet, dass** die translatorische Bewegung des Windgenerators (1) parallel zu der Fläche eines Untergrundes geführt erfolgt, insbesondere parallel zu einer vorzugsweise horizontalen Ebene geführt.

3.  Windgenerator (1) nach Anspruch 1 oder 2, **dadurch gekennzeichnet, dass** der Windwiderstand des Windrades (4) oder von Teilen desselben verstellbar ist, insbesondere indem der Anstellwinkel eines oder mehrerer Flügel oder sonstiger Windleitflächen veränderbar ist, oder indem das Windrad (4) gegenüber der Anströmrichtung verschwenkbar ist, oder indem eine vorzugsweise stromlinienförmige Verkleidung (11) vor das Windrad (4) schwenkbar ist.

4.  Windgenerator (1) nach einem der Ansprüche 1 bis 3, **dadurch gekennzeichnet, dass** der Windgenerator (1) und/oder das Windrad (4) auf einem Fahrwerk (2) und/oder an Bord eines Fahrzeugs angeordnet ist.

5.  Windgenerator (1) nach einem der vorhergehenden Ansprüche, **dadurch gekennzeichnet, dass** der Windgenerator (1) und/oder dessen Windrad drehbewegungsmäßig nicht an eines der unterseitigen Räder (6) gekoppelt ist.

6.  Windgenerator (1) nach einem der vorhergehenden Ansprüche, **gekennzeichnet durch** eine Einrichtung zum Antrieb des Fahrzeugs oder Fahrwerks (2), insbesondere einen Motor (8), wobei die Antriebseinrichtung vorzugsweise als Verbrennungsmotor ausgebildet ist oder als Elektromotor oder als ein um eine vertikale Achse drehbar gelagerter Propeller, der von einer vorzugsweise nach oben gerichteten Konvektionsströmung angetrieben wird.

7. Windgenerator (1) nach Anspruch 6, **dadurch gekennzeichnet, dass**

    a) sich die Projektion des Schwerpunktes der Einrichtung für den Antrieb des Fahrwerks (2) oder Fahrzeugs, insbesondere des Motors (8), innerhalb eines von dem Fahrzeug oder Fahrwerk (2) bei seiner/ihrer Bewegung beschriebenen Kreises befindet, vorzugsweise an oder nahe von dessen Mittelpunkt, oder dass
    b) sich die Projektion des Schwerpunktes der Einrichtung für den Antrieb des Fahrzeugs oder Fahrwerks (2), insbesondere des Motors (8), auf den das Fahrzeug führenden Untergrund außerhalb eines von den Aufstandsbereichen der unterseitigen Räder (6) auf dem Untergrund aufgespannten Vielecks befindet.

8. Windgenerator (1) nach einem der vorhergehenden Ansprüche, **dadurch gekennzeichnet, dass** sich die Projektion des Schwerpunktes des Windrades (4) oder Windgenerators (1) auf den das Fahrzeug führenden Untergrund innerhalb eines von den Aufstandsbereichen der unterseitigen Räder (6) auf dem Untergrund aufgespannten Vielecks befindet.

9. Windgenerator (1) nach einem der vorhergehenden Ansprüche, **dadurch gekennzeichnet, dass** an einer Führungseinrichtung gleichzeitig mehrere Fahrwerke geführt sind, wobei vorzugsweise mehrere, an der selben Führungseinrichtung geführte Fahrwerke miteinander verbunden oder gekoppelt sind, um synchrone Bewegungen auszuführen.

10. Windgenerator (1) nach einem der vorhergehenden Ansprüche, **dadurch gekennzeichnet, dass** die vom Wind (W) anzuströmenden Seiten der Windräder (4) an mehreren Fahrwerken (2) in die derselben Bewegungsrichtung des Verbindungsmittels entsprechenden, lokalen Richtungen weisen, oder in die entgegengesetzten Bewegungsrichtungen des Verbindungsmittels entsprechenden, lokalen Richtungen weisen.

11. Windgenerator (1) nach einem der vorhergehenden Ansprüche, **dadurch gekennzeichnet, dass** die Flügel eines Windrades (4) um ihre Längsachsen verstellbar sind, um an unterschiedliche Relativgeschwindigkeiten der anströmenden Luft angepasst werden zu können, vorzugsweise wobei die Flügel eines Windrades (4) kontinuierlich verstellbar sind, also über beliebige, unbegrenzte Anstellwinkel hinaus, um an eine Umkehr der Relativdrehrichtung gegenüber der anströmenden Luft angepasst werden zu können.

12. Windgenerator (1) nach einem der vorhergehenden Ansprüche, **gekennzeichnet durch** eine Regelung, welche mehrere, vorzugsweise zwei, untereinander verbundene Windräder (4) stets gegen den Wind - (W) ausrichtet, indem jeweils der Anstellwinkel der Flügel des in der jeweiligen Anströmrichtung vorderen Windrades (4) derart verstellt wird, dass der Windwiderstand dieses Windrades (4) erhöht wird und also von dem anströmenden Wind (W) zurückgedrängt wird.

13. Windgenerator (1) nach einem der vorhergehenden Ansprüche, **gekennzeichnet durch** eine Einrichtung zur Einspeisung der gewonnenen Elektroenergie als Strom in ein Stromnetz, insbesondere in ein Wechselstrom- oder Drehstromnetz, vorzugsweise mit einer Einrichtung zur Synchronisation des einzuspeisenden Stroms mit der Frequenz der Spannung in dem Wechselstrom- oder Drehstromnetz.

**Claims**

1. A wind generator (1), comprising a wind wheel (4) which is mounted so that it is rotatable about a horizontal or approximately horizontal rotational axis, and which has one or more blades or other wind-guiding surfaces for converting flow energy of the wind into rotational energy, and at least one generator (5), coupled to the hub or shaft of the wind wheel or to the output shaft of a gear connected thereto, for converting the rotational energy into electrical energy, wherein the center of gravity of the wind wheel (4), together with the hub and rotor shaft and rotatable parts coupled thereto which rotate about the same rotational axis, is translationally movable in a direction completely or predominantly in parallel to the rotational axis of the wind turbine (4), wherein the wind wheel (4) is neither arranged within a wind tunnel nor surrounded by wind deflector blades, so that the wind wheel is always able to catch a maximum of the inflowing air,
**characterized in that**

    a) the wind generator (1) is designed as a road vehicle with bottom-side wheels,
    b) wherein the road vehicle is designed for a translational propulsion in a direction parallel to the rotational axis of the wind wheel (4) in order to virtually increase or reduce the inflow velocity of the wind,

c) and wherein a freewheel is situated between the wind wheel (4) and the electric generator (5) associated therewith, so that in the event of a countergust, the electric generator (5), despite the decelerated wind wheel (4), can continue to rotate freely in a practically undecelerated manner.

2. The wind generator (1) according to claim 1, **characterized in that** the translational movement of the wind generator (1) takes place guided in parallel to the surface area of a subsurface, in particular guided in parallel to a preferably horizontal plane.

3. The wind generator (1) according to claim 1 or 2, **characterized in that** the wind resistance of the wind wheel (4) or of parts thereof is adjustable, in particular **in that** the setting angle of one or more blades or other wind-guiding surfaces is changeable, or **in that** the wind wheel (4) is pivotable with respect to the incident flow direction, or **in that** a preferably streamlined cowling (11) is pivotable in front of the wind wheel (4).

4. The wind generator (1) according to one of claims 1 to 3, **characterized in that** the wind generator (1) and/or the wind wheel (4) are/is situated on a chassis (2) and/or onboard a vehicle.

5. The wind generator (1) according to one of the preceding claims, **characterized in that** the wind generator (1) and/or its wind wheel are/is not coupled in terms of rotational movement to one of the bottom-side wheels (6).

6. The wind generator (1) according to one of the preceding claims, **characterized by** a device, in particular a motor (8), for driving the vehicle or chassis (2), wherein the drive device is preferably designed as an internal combustion engine, as an electric motor, or as a propeller that is mounted so that it is rotatable about a vertical axis, and is driven by a preferably upwardly directed convection flow.

7. The wind generator (1) according to claim 6, **characterized in that**

a) the projection of the center of gravity of the device, in particular the motor (8), for driving the chassis (2) or vehicle is situated within a circle described by the vehicle or chassis (2) during its movement, preferably at or near the midpoint of the circle, or **in that**
b) the projection of the center of gravity of the device, in particular the motor (8), for driving the vehicle or chassis (2) is situated on the subsurface guiding the vehicle, outside a polygon spanned by the contact areas of the bottom-side wheels (6) on the subsurface.

8. The wind generator (1) according to one of the preceding claims, **characterized in that** the projection of the center of gravity of the wind wheel (4) or wind generator (1) onto the subsurface guiding the vehicle is situated within a polygon spanned by the contact areas of the bottom-side wheels (6) on the subsurface.

9. The wind generator (1) according to one of the preceding claims, **characterized in that** multiple chassis are guided on the same guide device, preferably wherein multiple chassis guided on the same guide device are connected or coupled to one another in order to undergo synchronous movements.

10. The wind generator (1) according to one of the preceding claims, **characterized in that** those sides of the wind wheels (4), which are acted on by incident wind (W) on multiple chassis (2), point in local directions corresponding to the same movement direction of the connecting means, or in local directons corresponding to opposite movement directions of the connecting means.

11. The wind generator (1) according to one of the preceding claims, **characterized in that** the blades of a wind wheel (4) are adjustable about their longitudinal axes in order to be adaptable to different relative speeds of the incident air, preferably wherein the blades of a wind wheel (4) are continuously adjustable, i.e., adjustable over arbitrary, unlimited setting angles, in order to be adaptable to a reversal of the direction of relative rotation with respect to the incident air.

12. The wind generator (1) according to one of the preceding claims, **characterized by** a regulation which always orients multiple, preferably two, mutually connected wind wheels (4) against the wind (W), in that the setting angle of the blades of the wind wheel (4) which is forwardmost in the particular incident flow direction is in each case adjusted in such a way that the wind resistance of this wind wheel (4) is increased, in order to push that wind wheel back by the incident wind (W).

13. The wind generator (1) according to one of the preceding claims, **characterized by** a device for feeding the obtained electrical energy as current into a power grid, in particular an alternating current power grid or three-phase power grid, preferably with a device for synchronizing the current to be fed, with the frequency of the voltage in the alternating current power grid or three-phase power grid.

**Revendications**

1. Aérogénérateur (1) comprenant une roue éolienne (4) qui est montée de manière à tourner autour d'un axe de rotation horizontal ou approximativement horizontal et comporte une ou plusieurs pales ou autres surfaces de guidage d'air pour convertir l'énergie cinétique du vent en énergie de rotation, ainsi qu'au moins un générateur (5) destiné à convertir l'énergie de rotation en énergie électrique, qui est couplé au moyeu ou à l'arbre de la roue éolienne ou à l'arbre de sortie d'un mécanisme d'entraînement qui s'y raccorde, le centre de gravité de la roue éolienne (4), conjointement avec le moyeu et l'arbre de rotor ainsi que les éléments qui y sont raccordés, sont mobiles en rotation et tournent autour du même axe de rotation, étant mobile en translation entièrement ou essentiellement parallèlement à l'axe de rotation de la roue éolienne (4), dans une direction, la roue éolienne (4) n'étant disposée ni dans une soufflerie ni entourée de tôles de guidage d'air, de sorte que la roue éolienne peut toujours capturer un maximum de l'air affluant, **caractérisé en ce que**

   a) l'aérogénérateur (1) est réalisé sous forme de véhicule routier comportant des roues sur la face inférieure,
   b) **en ce que** le véhicule routier est conçu pour être entraîné en translation dans un sens parallèle à l'axe de rotation de la roue éolienne (4) afin d'augmenter ou de réduire virtuellement la vitesse du vent,
   c) et **en ce qu'**une roue libre est disposée entre la roue éolienne (4) et le générateur électrique (5) associé à celle-ci de sorte qu'en cas de contre-rafale le générateur électrique (5) peut continuer à tourner en roue libre pratiquement non freiné malgré la roue éolienne (4) freinée.

2. Aérogénérateur (1) selon la revendication 1, **caractérisé en ce que** le mouvement de translation de l'aérogénérateur (1) s'effectue de manière guidée parallèlement à la surface d'un support, en particulier parallèlement à un plan de préférence horizontal.

3. Aérogénérateur (1) selon la revendication 1 ou 2, **caractérisé en ce que** la résistance au vent de la roue éolienne (4) ou de parties de celle-ci est réglable, en particulier en modifiant l'angle d'attaque d'une ou de plusieurs pales ou d'autres surfaces de guidage d'air, ou en faisant pivoter la roue éolienne (4) dans le sens opposé à la direction du vent, ou en pivotant un carénage (11) de préférence aérodynamique en amont de la roue éolienne (4).

4. Aérogénérateur (1) selon l'une des revendications 1 à 3, **caractérisé en ce que** l'aérogénérateur (1) et/ou la roue éolienne (4) est disposé sur un mécanisme de roulement (2) et/ou à bord d'un véhicule.

5. Aérogénérateur (1) selon l'une des revendications précédentes, **caractérisé en ce que** l'aérogénérateur (1) et/ou sa roue éolienne n'est pas couplé en rotation à une des roues (6) face inférieure.

6. Aérogénérateur (1) selon l'une des revendications précédentes, **caractérisé par** un dispositif d'entraînement du véhicule ou du mécanisme de roulement (2), en particulier par un moteur (8), en ce que le dispositif d'entraînement est conçu de préférence sous forme de moteur à combustion interne ou de moteur électrique ou sous forme d'hélice montée en rotation autour d'un axe vertical, qui est entraînée par un courant de convection de préférence dirigé vers le haut.

7. Aérogénérateur (1) selon la revendication 6, **caractérisé en ce que**

   a) la projection du centre de gravité du dispositif pour l'entraînement du mécanisme de roulement (2) ou du véhicule, en particulier du moteur (8), se trouve à l'intérieur d'un cercle décrit par le véhicule ou le mécanisme de roulement (2) lors de son déplacement, de préférence au niveau ou proche de son centre, ou que
   b) la projection du centre de gravité du dispositif pour l'entraînement du véhicule ou du mécanisme de roulement (2), en particulier du moteur (8), se trouve sur le support guidant le véhicule en dehors d'un polygone fixé sur le support par les zones de contact des roues (6) face inférieure.

8. Aérogénérateur (1) selon l'une des revendications précédentes, **caractérisé en ce que** la projection du centre de gravité de la roue éolienne (4) ou .de l'aérogénérateur (1) se trouve sur le support guidant le véhiculé à l'intérieur d'un polygone fixé sur le support par les zones de contact des roues (6) face inférieure.

9. Aérogénérateur (1) selon l'une des revendications précédentes, **caractérisé en ce que** plusieurs mécanismes de roulement sont guidés simultanément sur un dispositif de guidage, **en ce que** de préférence plusieurs mécanismes de roulement guidés sur le même dispositif de guidage sont reliés entre eux ou couplés afin d'effectuer des déplacements synchrones.

10. Aérogénérateur (1) selon l'une des revendications précédentes, **caractérisé en ce que** les côtés qui doivent être balayés par le vent (W) des roues éoliennes (4) au niveau de plusieurs mécanismes de roulement (2) pointent dans les directions locales, correspondant à la même direction de déplacement du moyen de liaison, ou dans les directions locales, correspondant à des directions de déplacement opposées.

11. Aérogénérateur (1) selon l'une des revendications précédentes, **caractérisé en ce que** les pales d'une roue éolienne (4) sont réglages autour de leurs axes longitudinaux afin de pouvoir être adaptées à différentes vitesses relatives de l'air qui afflue, de préférence **en ce que** les pales d'une roue éolienne (4) sont réglables de manière continue, par conséquent au-delà d'angles d'attaque aléatoires, illimités afin de pouvoir être adaptées à une inversion du sens de rotation relatif par rapport à l'air qui afflue.

12. Aérogénérateur (1) selon l'une des revendications précédentes, **caractérisé par** un réglage qui oriente plusieurs, de préférence deux roues éoliennes (4) reliées entre elles toujours dans le sens contraire au vent (W), en réglant respectivement l'angle d'attaque des pales de la roue éolienne (4) avant dans la direction du vent respective de façon à ce que la résistance au vent de cette roue éolienne (4) augmente, par conséquent soit repoussée par le vent (W) qui afflue.

13. Aérogénérateur (1) selon l'une des revendications précédentes, **caractérisé par** un dispositif destiné à l'alimentation de l'énergie électrique produite sous forme de courant dans un réseau électrique, en particulier dans un réseau à courant alternatif ou à courant triphasé, de préférence avec un dispositif de synchronisation du courant qui doit être alimenté avec la fréquence de la tension dans le réseau à courant alternatif ou à courant triphasé.

Fig.1

Fig.2

W

1'

4a

6a

2a

3a

9a

5a

12

8

10

7

4b

6b

3b

2b

6b

9b

5b

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005244262 A
- US 2011080004 A